# EUROPEAN PATENT SPECIFICATION

(11) **EP 1 005 797 B1**
(45) Date of publication and mention of the grant of the patent: **16.08.2006**
(21) Application number: 99123856.9
(22) Date of filing: 01.12.1999
(51) Int. Cl.: A23L 1/325, A23L 1/317, A23L 1/314, A23L 1/315

(54) **Processed meat food and method for producing it**
Verarbeitetes Fleischnahrungsmittel und Verfahren zur Herstellung
Produits alimentaires carnés et procédé de production

(30) Priority: 02.12.1998 JP 34318498
(43) Date of publication of application: 07.06.2000
(73) Proprietor: Sugino, Tetsuya, Ishikawa (JP)
(72) Inventor: Noda, Minoru, Kashiwa, Chiba (JP); Noda, Fumio, Nanao, Ishikawa (JP); Sugino, Tetsuya, Nanao, Ishikawa (JP); Sugino, Yoshito, Nanao, Ishikawa (JP); Takahashi, Mitsuo, Tokyo (JP)
(74) Representative: TBK-Patent

(56) References cited:
- US-A- 4 362 752
- US-A- 4 759 933
- US-A- 5 026 573
- US-A- 5 804 245
- PATENT ABSTRACTS OF JAPAN vol. 015, no. 096 (C-0812), 7 March 1991 (1991-03-07) & JP 02 308774 A (OSAMU UCHI), 21 December 1990 (1990-12-21)
- PATENT ABSTRACTS OF JAPAN vol. 007, no. 281 (C-200), 15 December 1983 (1983-12-15) & JP 58 162265 A (SHINJI KURIHARA), 26 September 1983 (1983-09-26)
- DATABASE WPI Section Ch, Week 198951 Derwent Publications Ltd., London, GB; Class D12, AN 1989-374587 XP002159092 & JP 01 281063 A (NICHIMO KK), 13 November 1989 (1989-11-13)
- PATENT ABSTRACTS OF JAPAN vol. 010, no. 383 (C-393), 23 December 1986 (1986-12-23) & JP 61 173768 A (AJINOMOTO CO INC), 5 August 1986 (1986-08-05)
- PATENT ABSTRACTS OF JAPAN vol. 007, no. 209 (C-186), 14 September 1983 (1983-09-14) & JP 58 107157 A (AJINOMOTO KK), 25 June 1983 (1983-06-25)
- PATENT ABSTRACTS OF JAPAN vol. 1998, no. 06, 30 April 1998 (1998-04-30) & JP 10 033145 A (OOTOME KAMABOKO KK), 10 February 1998 (1998-02-10)
- DATABASE WPI Section Ch, Week 199948 Derwent Publications Ltd., London, GB; Class D12, AN 1999-564406 XP002159093 -& JP 11 243921 A (SUGIYO CO LTD), 14 September 1999 (1999-09-14)

## Description

### TECHNICAL FIELD

The present invention relates to a processed meat food produced by mixing a fresh fish and shellfish or a dressed meat or the mixture thereof after heating and a ground meat to obtain a mixture and heating the mixture, and a method for producing the processed meat food.

### BACKGROUND ART

In Japanese Laid-Open Patent Publication No. 10 42, 834 of 1998, it is disclosed that a fish and shellfish sausage keeping the peculiar palatability of the fish therein, produced by heating or heating and seasoning the fish and shellfish to maximize the peculiar palatability of the fish according to the method suitable for each kind of fish and shellfish, and then filling the cooked product with a ground fish meat in an edible casing and heating it.

In the above fish and shellfish sausage, it is need to add a binder such as gelatin and starch because the quality and the condition of the mixed materials are differ from each other. Further, there is a problem that the bindingness can not be obtained unless the considerable amount of' binder is added, depending on the combination of the materials having different conditions, thence the sausage having sufficient quality can not be obtained due to the loss of the gourmand taste.

### SUMMARY OF THE INVENTION

Therefore, the present inventors had studied experimentally and effortfully about the influence to the molding of the processed meat food by the amount of added water, the process by the alkaline substance and the process under vacuum to concretely accomplish the technical object to provide a processed meat food having the improved gourmand taste in addition to the superior bindingness without adding the binder.

Test example of the effect by the amount of added water, the process by the alkaline substance and the process under vacuum carried out by the present inventors is described hereinafter.

75 kg of the chicken chopped by the 6 mm plate was divided into the 75 portions of 1 kg of the chicken. To 15 portions of the chicken, water was not added (block of 0 weight part of water), to 15 portions of the reminded 60 portions, 200g (20 weight parts) of water per 1 kg of the chicken was added (block of 20 weight parts of water), to 15 portions of the reminded 45 portions, 500g (50 weight parts) of water per 1 kg of the chicken was added (block of 50 weight parts of water), to 15 portions of the reminded 30 portions, 1 kg (100 weight parts) of water per 1 kg of the chicken was added (block of 100 weight parts of water), and to the reminded 15 portions, 1.2 kg (120 weight parts) of water per 1 kg of the chicken was added (block of 120 weight parts of water).

Next, in each block, to 3 portions of 15 portions, the alkaline substance was not added (group of 0 weight parts of the alkali), to 3 portions of the reminded 12 portions, 1g (0.1 weight parts) of sodium carbonate per 1 kg of the chicken was added (group of 0.1 weight parts of alkali), to 3 portions of the reminded 9 portions, 5g (0.5 weight parts) of sodium carbonate per 1 kg of the chicken was added (group of 0.5 weight parts of alkali), 3 portions of the reminded 6 portions, 10g (1.0 weight parts) of sodium carbonate per 1 kg of the chicken was added (group of 1.0 weight parts of alkali), and to the reminded 3 portions, 12g (1.2 weight parts) of sodium carbonate per 1 kg of the chicken was added (group of 1.2 weight parts of alkali).

Subsequently, in each group, 1 portion of 3 portions was ground for 10 minutes by the food cutter set in the box adjusted to 760 torr of the vacuum degree to obtain the ground meat (sample of 760 torr of the vacuum degree), 1 portion of the reminded 2 portions was processed in the same manner by the food cutter set in the box adjusted to 100 torr of the vacuum degree to obtain the ground meat (sample of 100 torr of the vacuum degree), and the reminded 1 portion was processed in the same manner by the food cutter set in the box adjusted to 50 torr of the vacuum degree to obtain the ground meat (sample of 50 torr of the vacuum degree). N.B.: 1 Torr ≙ 133,0 Pa

Then, 90 weight parts of each ground meat and 10 weight parts of the kamaboko (boiled fish meat paste) cut in the rectangle-shape were mixed, filled in the artificial casing comprising collagen, sealed at both ends, heated at 85°C for 20 minutes in the steamboiler and cooled at 1°C to obtain the chicken sausage containing the kamaboko.

**Table 1**

| Samples | Water part by weight | Sodium Carbonate part by weight | Vacuum Degree torr | Binding Condition |
|---|---|---|---|---|
| 1 | 0 | 0 | 760 | - |
| 2 | 0 | 0 | 100 | - |
| 3 | 0 | 0 | 50 | - |
| 4 | 0 | 0.1 | 760 | - |
| 5 | 0 | 0.1 | 100 | - |
| 6 | 0 | 0.1 | 50 | - |
| 7 | 0 | 0.5 | 760 | - |
| 8 | 0 | 0.5 | 100 | - |
| 9 | 0 | 0.5 | 50 | - |
| 10 | 0 | 1.0 | 760 | - |
| 11 | 0 | 1.0 | 100 | - |
| 12 | 0 | 1.0 | 50 | - |
| 13 | 0 | 1.2 | 760 | - |
| 14 | 0 | 1.2 | 100 | |
| 15 | 0 | 1.2 | 50 | - |

**Table 2**

| Samples | Water part by weight | Sodium Carbonate part by weight | Vacuum Degree torr | Binding Condition |
|---|---|---|---|---|
| 16 | 20 | 0 | 760 | - |
| 17 | 20 | 0 | 100 | - |
| 18 | 20 | 0 | 50 | - |
| 19 | 20 | 0.1 | 760 | - |
| 20 | 20 | 0.1 | 100 | + |
| 21 | 20 | 0.1 | 50 | + + |
| 22 | 20 | 0.5 | 760 | - |
| 23 | 20 | 0.5 | 100 | + + |
| 24 | 20 | 0.5 | 50 | + + |
| 25 | 20 | 1.0 | 760 | - |
| 26 | 20 | 1.0 | 100 | + |
| 27 | 20 | 1.0 | 50 | + + |
| 28 | 20 | 1.2 | 760 | - |
| 29 | 20 | 1.2 | 100 | - |
| 30 | 20 | 1.2 | 50 | + |

**Table 3**

| Samples | Water part by weight | Sodium Carbonate part by weight | Vacuum Degree torr | Binding Condition |
|---|---|---|---|---|
| 31 | 50 | 0 | 760 | - |
| 32 | 50 | 0 | 100 | - |
| 33 | 50 | 0 | 50 | - |
| 34 | 50 | 0.1 | 760 | - |
| 35 | 50 | 0.1 | 100 | + |
| 36 | 50 | 0.1 | 50 | + + |
| 37 | 50 | 0.5 | 760 | - |
| 38 | 50 | 0.5 | 100 | + + |
| 39 | 50 | 0.5 | 50 | + + |
| 40 | 50 | 1.0 | 760 | - |
| 41 | 50 | 1.0 | 100 | + |
| 42 | 50 | 1,0 | 50 | + + |
| 43 | 50 | 1.2 | 760 | - |
| 44 | 50 | 1.2 | 100 | - |
| 45 | 50 | 1.2 | 50 | + |

**Table 4**

| Samples | Water part by weight | Sodium Carbonate part by weight | Vacuum Degree torr | Binding Condition |
|---|---|---|---|---|
| 46 | 100 | 0 | 760 | - |
| 47 | 100 | 0 | 100 | - |
| 48 | 100 | 0 | 50 | - |
| 49 | 100 | 0.1 | 760 | - |
| 50 | 100 | 0.1 | 100 | + |
| 51 | 100 | 0.1 | 50 | + + |
| 52 | 100 | 0.5 | 760 | - |
| 53 | 100 | 0.5 | 100 | + + |
| 54 | 100 | 0. 5 | 50 | + + |
| 55 | 100 | 1.0 | 760 | - |
| 56 | 100 | 1.0 | 100 | + |
| 57 | 100 | 1.0 | 50 | + + |
| 58 | 100 | 1.2 | 760 | - |
| 59 | 100 | 1.2 | 100 | - |
| 60 | 100 | 1.2 | 50 | + |

**Table 5**

| Samples | Water part by weight | Sodium Carbonate part by weight | Vacuum Degree torr | Binding Condition |
|---|---|---|---|---|
| 61 | 120 | 0 | 760 | - |
| 62 | 120 | 0 | 100 | - |
| 63 | 120 | 0 | 50 | - |
| 64 | 120 | 0.1 | 760 | - |
| 65 | 120 | 0.1 | 100 | - |
| 66 | 120 | 0.1 | 50 | + |
| 67 | 120 | 0.5 | 760 | - |
| 68 | 120 | 0.5 | 100 | - |
| 69 | 120 | 0.5 | 50 | + |
| 70 | 120 | 1.0 | 760 | - |
| 71 | 120 | 1.0 | 100 | - |
| 72 | 120 | 1.0 | 50 | + |
| 73 | 120 | 1.2 | -760 | - |
| 74 | 120 | 1.2 | 100 | - |
| 75 | 120 | 1.2 | 50 | - |

As shown in Tables 1 to 5, the nice binding condition was confirmed in cases of grinding of 20 to 100 weight parts of the added water, 0.1 to 1.0 weight parts of the added sodium carbonate and 100 torr or less of the vacuum degree.

Next, test example of the effect by various kinds of alkaline substance is- described hereinafter.

12 kg of the chicken chopped by the 6 mm plate was divided into the 12 portions of 1 kg of the chicken. In each portion, 500g (50 weight parts) of water and 20g (2 weight parts) of common salt per 1 kg of the chicken were added, respectively. Further, 4g (0.4 weight parts) of sodium hydroxide, sodium carbonate, sodium hydrogencarbonate, sodium phosphate, sodium lactate, sodium citrate, calcium hydroxide, calcium carbonate, calcium hydrogencarbonate, calcium phosphate, calcium lactate or calcium citrate per 1 kg of the chicken was added to each portion and ground for 10 minutes by the food cutter set in the box adjusted to 60 torr of the vacuum degree to obtain the ground meat added sodium hydroxide (sample 76), the ground meat added sodium carbonate (sample 77), the ground meat added sodium hydrogencarbonate (sample 78), the ground meat added sodium phosphate (sample 79), the ground meat added sodium lactate (sample 80), the ground meat added sodium citrate (sample 81), the ground meat added calcium hydroxide (sample 82), the ground meat added calcium carbonate (sample 83), the ground meat added calcium hydrogencarbonate (sample 84), the ground meat added calcium phosphate (sample 85), the ground meat added calcium lactate (sample 86) and the ground meat added calcium citrate (sample 87).

Then, 80 weight parts of each ground meat and 20 weight parts of the kamaboko cut in the rectangle-shape were mixed , filled in the sheep casing, sealed at both ends, and steamed at 85°C for 25 minutes to obtain the chicken sausage containing the kamaboko.

The binding condition of the meat of each chicken sausage containing the kamaboko was evaluated by 20 panelists (8 adult males, 12 adult females) according to the seeing check. The results are shown in Table 6.

As shown in Table 6, the nice binding condition was confirmed in cases of various kinds of alkaline substance above described.

**Table 6**

| Samples | Alkaline substances | Binding Condition |
|---|---|---|
| 76 | Sodium Hydroxide | + + |
| 77 | Sodium Carbonate | + + |
| 78 | Sodium Hydrogencarbonate. | + + |
| 79 | Sodium Phosphate | + + |
| 80 | Sodium Lactate | ++ |
| 81 | Sodium Citrate | + + |
| 82 | Calcium Hydroxide | + + |
| 83 | Calcium Carbonate | + + |
| 84 | Calcium Hydrogencarbonate | + + |
| 85 | Calcium Phosphate | + + |
| 86 | Calcium Lactate | + + |
| 87 | Calcium Citrate | + + |

The present inventors found through the above test examples that the processed meat food comprising the materials different in quality and having the superior bindingness can be obtained by preparing the ground meet under 100 torr or less of the vacuum degree after the water adding process and the process by alkali which meet the particular conditions, without adding the binder, thence the above technical object was accomplished.

The above technical problems can be solved by the present invention as described hereinafter.

Namely, a processed meat food according to the present invention is produced by mixing
a filler hashed or shattered after heating or heating and seasoning a meat of a fresh fish and shellfish and/or an animal in one condition selected from the group consisting of the condition as it is, the condition removed the non-edible portion and the condition of the slice thereof, and
a meat paste produced by kneading 100 weight parts of a meat with water in an amount of more than 20 weight parts to not more than 100 weight parts, an alkaline substance in an amount of 0.1 to 1.0 weight part and at least a seasoning under 100 torr or less of vacuum,
and then heating the mixture of said filler and meat paste.

Also, a processed meat food according to the present invention is produced by mixing
a filler hashed or shattered after heating or.heating and seasoning a meat of a fresh fish and shellfish and/or an animal in one condition selected from the group consisting of the condition as it is, the condition removed the non-edible portion and the condition of the slice thereof, and
a meat paste produced by kneading 100 weight parts of a meat with water in an amount of more than 20 weight parts to not more than 100 weight parts, an alkaline substance in an amount of 0.1 to 1.0 weight part and at least a seasoning under 100 torr or less of vacuum,
filling the mixture of said filler and meat paste in an edible casing and heating the mixture.

Also, in each processed meat food above described of the present invention, the alkaline substance is one or more selected from the group consisting of hydroxide, carbonate, hydrogencarbonate, phosphate, polyphosphate and a salt of organic acid of an alkaline metal or an alkaline earth metal.

Also, a method for producing a processed meat food according to the present invention comprises the step of mixing
5 to 95 weight parts of a filler hashed or shattered after heating or heating and seasoning a meat of a fresh fish and shellfish and/or an animal in one condition selected from the group consisting of the condition as it is, the condition removed the non-edible portion and the condition of the slice thereof, and
95 to 5 weight parts of a meat paste produced by kneading 100 weight parts of a meat with water in an amount of more than 20 weight parts to not more than 100 weight parts, an alkaline substance in an amount of 0.1 to 1.0 weight part and at least a seasoning under 100 torr or less of vacuum,
and then heating the mixture of said filler and meat paste.

Also, a method for producing a processed meat food according to the present invention comprises the step of mixing
5 to 95 weight parts of a filler hashed or shattered after heating or heating and seasoning a meat of a fresh fish and shellfish and/or an animal in one condition selected from the group consisting of the condition as it is, the condition removed the non-edible portion and the condition of the slice thereof, and
95 to 5 weight parts of a meat paste produced by kneading 100 weight parts of a meat with water in an amount of more than 20 weight parts to not more than 100 weight parts, an alkaline substance in an amount of 0.1 to 1.0 weight part and at least a seasoning under 100 torr or less of vacuum,
filling the mixture of said filler and meat paste in an edible casing and heating the mixture.

Further, in each method for producing a processed meat food above described of the present invention, the alkaline substance is one or more selected from the group consisting of hydroxide, carbonate, hydrogencarbonate, phosphate, polyphosphate and a salt of organic acid of an alkaline metal or an alkaline earth metal.

### DETAILED DESCRIPTION OF THE PREFERRED EMBODIMENTS

The preferred embodiments of the present invention are explained hereinafter.

The filler is obtained by heating or heating and seasoning a fresh fish and shellfish, a meat or the mixture thereof in the condition as it is, the condition removed the non-edible portion and the condition of the slice thereof to maximize the peculiar palatability thereof and hashing or shattering it.

Next, the ground meat is prepared by adding water in an amount of more than 20 weight parts to not more than 100 weight parts, an alkaline substance in an amount of 0.1 to 1.0 weight part and a seasoning, in need a spice; to 100 weight parts of the meat and grounding them under 100 torr or less of vacuum.

Then, the above filler and the above ground meat are mixed and heated to produce the processed meat food. Concretely, the above filler and the above ground meat may be mixed, molded in the mold, and then heated to produce the processed meat food like the kamaboko. Also, the above filler and the above ground meat may be mixed, filled in the edible casing, and then heated to produce the meat sausage.

As the alkaline substance, one or more selected from the group consisting of hydroxide, carbonate, hydrogencarbonate, phosphate, polyphosphate and a salt of organic acid of an alkaline metal or an alkaline earth metal may be used. The alkaline substance may be the solution thereof. Concretely, sodium hydroxide, sodium carbonate, sodium hydrogencarbonarte, sodium phosphate, sodium lactate, sodium tripolyphosphate, calcium hydroxide, calcium carbonate, calcium hydrogencarbonate, calcium phosphate, calcium lactate and the like may be used.

In the content ratio of the above filler and the above ground meat, the filler : the ground meat may be 5 to 95 weight parts : 95 to 5 weight parts. In case that the content ratio of the filler is less than 5 weight parts, the palatability induced by cooking can not be maximized because the content amount of the filler is too little, therefore not preferable. In case that the content ratio of the filler is more than 95 weight parts, the binding of the ground meat can not be obtained because the content amount of the filler is too much, therefore not preferable.

In the present invention, by mixing the filler heated or heated and seasoned a fresh fish and shellfish or a meat in the condition as it is, the condition removed the non-edible portion or the condition of the slice thereof to sufficiently maximize the essential palatability thereof and the feel upon the eating and the meat paste kneaded with water in an amount of more than 20 weight part to not more than 100 weight parts, an alkaline substance in an amount of 0.1 to 1.0 weight parts and a seasoning, in need a spice, against 100 weight parts of the meat under 100 torr or less of vacuum to obtain a mixture, filling the mixture in an edible casing and heating the mixture, because the filler comprising the fish and the meat and the ground meat are bound as a whole, new type of the juicy processed meat food can be obtained not having hardened meat structure by the heating after the molding or casing in addition to that it is not need to use the binder such as gelatin and starch.

### Examples

Examples 1 to 7 and Comparative Examples 1 and 2:

To 2.6 kg of the chicken chopped by the 6mm plate, 1.6 kg of water, 60g of common salt and 20g of pepper, further 10g of sodium citrate were added and ground for 10 minutes by Stephan cutter adjusted to 40 torr of the vacuum degree to prepare 4.2 kg of the ground chicken meat.

Next, 4.2 kg of the kamaboko cut in rectangle-shape was prepared.

Subsequently, 30g of 4.2 kg of the above ground chicken and 970g of 4.2 kg of the above cut kamaboko were mixed and heated at 90°C for 0.5 hour by the scroll-typed molding apparatus (produced by Kuwabara Seisakusyo) to obtain 32 sticks of the processed chicken food like kamaboko of 30g/stick. (Comparative Example 1).

Similarly, 50g of the above ground chicken and 950g of the above cut kamaboko were mixed to obtain 32 sticks of the processed chicken food like kamaboko (Example 1). Further, 32 sticks of the processed chicken food like kamaboko having the mixing ratio of 100g of the ground chicken and 900g of the cut kamaboko (Example 2), 32 sticks of the processed chicken food like kamaboko having the mixing ratio of 200g of the ground chicken and 800g of the cut kamaboko (Example 3), 32 sticks of the processed chicken food like kamaboko having the mixing ratio of 400g of the ground chicken and 600g of the cut kamaboko (Example 4), 32 sticks of the processed chicken food like kamaboko having the mixing ratio of 600g of the ground chicken and 400g of the cut kamaboko (Example 5), 32 sticks of the processed chicken food like kamaboko having the mixing ratio of 800g of the ground chicken and 200g of the cut kamaboko (Example 6), 32 sticks of the processed chicken food like kamaboko having the mixing ratio of 950g of the ground chicken and 50g of the cut kamaboko (Example 7) and 32 sticks of the processed chicken food like kamaboko having the mixing ratio of 970g of the ground chicken and 30g of the cut kamaboko (Comparative Example 2) were obtained in the same manner.

The binding condition of the meat structure of the above processed chicken food like kamaboko in stick-shape was evaluated by 20 panelists (8 adult males, 12 adult females) according to the seeing check. The sensory test was also carried out by the same 20 panelists. The results are shown in Table 7. In the section of the binding condition, - shows the worse binding condition, + shows the nice binding condition, and ++ shows the superior binding condition. In the section of the sensory test, - shows no feeling of the material flavor, + shows the feeling of the material flavor and ++shows the strong feeling of the material flavor.

**Table 7**

| | Ground Chicken | Cut Kamaboko | Binding Condition | Sensory Test |
|---|---|---|---|---|
| Comp.Ex. 1 | 30 g | 970 g | - | - |
| Example 1 | 50 | 950 | + | + |
| Example 2 | 100 | 900 | ++ | ++ |
| Example 3 | 200 | 800 | ++ | + + |
| Example 4 | 400 | 600 | ++ | + + |
| Example 5 | 600 | 400 | ++ | ++ |
| Example 6 | 800 | 200 | ++ | ++ |
| Example 7 | 950 | 50 | + + | + |
| Comp.Ex. 2 | 970 | 30 | + + | - |

It was confirmed that the processed chicken foods like kamaboko in stick-shape having the mixing ratio of 50 to 950g of the ground chicken and 950 to 50g of the cut kamaboko were nice, particular the processed chicken foods like kamaboko in stick-shape having the mixing ratio of 100 to 800g of the ground chicken and 900 to 200g of the cut kamaboko were superior, in the binding condition and the sensory test.

### Examples 8 to 14 and Comparative Examples 3 and 4:

To 2.6 kg of the chicken chopped by the 6mm plate, 1.6 kg of water and 52g of common salt, further 7g of sodium carbonate were added and ground for 10 minutes by Stephan cutter adjusted to 35 torr of the vacuum degree to prepare 4.2 kg of the ground chicken meat.

Next, 4.2 kg of the broiled eel cut in dice-shape was prepared by splitting the eel, removing the viscera, the midrib and the chine thereof, cutting off the head and the fin thereof, broiling as it is, and further broiling with the sauce having the mixing ratio of 3.5L of soy sauce, 3.0g of mirin and 1.5 kg of sugar and cutting in the 4 to 5 mm3 dice-shape.

Subsequently, 30g of 4.2 kg of the above ground chicken and 970g of 4.2 kg of the above broiled eel cut were mixed, filled in the artificial casing comprising collagen, sealed at both ends, heated at 85°C for 20 minutes in the steamboiler, and cooled 5 °C to obtain 50 sticks of the chicken sausage containing the eel of 20g/stick (Comparative Example 3).

Similarly, 50g of the above ground chicken and 950g of the above broiled eel cut were mixed to obtain 50 sticks of the chicken sausage containing the eel (Example 8). Further, 50 sticks of the chicken sausage containing the eel having the mixing ratio of 100g of the ground chicken and 900g of the broiled eel cut (Example 9), 50 sticks of the chicken sausage containing the eel having the mixing ratio of 200g of the ground chicken and 800g of the broiled eel cut (Example 10), 50 sticks of the chicken sausage containing the eel having the mixing ratio of 400g of the ground chicken and 600g of the broiled eel cut (Example 11), 50 sticks of the chicken sausage containing the eel having the mixing ratio of 600g of the ground chicken and 400g of the broiled eel cut (Example 12), 50 sticks of the chicken sausage containing the eel having the mixing ratio of 800g of the ground chicken and 200g of the broiled eel cut (Example 13), 50 sticks of the chicken sausage containing the eel having the mixing ratio of 950g of the ground chicken and 50g of the broiled eel cut (Example 14) and 50 sticks of the chicken sausage containing the eel having the mixing ratio of 970g of the ground chicken and 30g of the broiled eel cut (Comparative Example 4) were obtained in the same manner.

The binding condition of the meat structure of the above chicken sausage containing the eel was evaluated by 20 panelists (8 adult males, 12 adult females) according to the seeing check. The sensory test was also carried out by the same 20 panelists. The results are shown in Table 8.

**Table 8**

| | Ground Chicken | Broiled Eel Cut | Binding Condition | Sensory Test |
|---|---|---|---|---|
| Comp.Ex. 3 | 30 g | 970 g | - | - |
| Example 8 | 50 | 950 | + | + |
| Example 9 | 100 | 900 | + + | + + |
| Example 10 | 200 | 800 | + + | + + |
| Example 11 | 400 | 600 | + + | + + |
| Example 12 | 600 | 400 | + + | + + |
| Example 13 | 800 | 200 | + + | + + |
| Example 14 | 950 | 50 | + + | + |
| Comp.Ex. 4 | 970 | 30 | + + | - |

It was confirmed that the chicken sausages containing the eel having the mixing ratio of 50 to 950g of the ground chicken and 950 to 50g of the broiled eel cut were nice, particular the chicken sausages containing the eel having the mixing ratio of 100 to 800g of the ground chicken and 900 to 200g of the broiled eel out kamaboko were superior, in the binding condition and the sensory test.

### Comparative Examples 5 to 13:

To 2.6 kg of the chicken chopped by the 6mm plate, 1.6 kg of water and 52g of common salt were added and ground for 10 minutes by Stephan cutter adjusted to 35 torr of the vacuum degree to prepare 4.2 kg of the ground chicken meat added no alkaline substance.

Next, using the above ground chicken, 50 sticks of the chicken sausage containing the eel having the mixing ratio of 30g of the ground chicken and 970g of the broiled eel cut (Comparative Example 5) , 50 sticks of the chicken sausage containing the eel having the mixing ratio of 50g of the ground chicken and 950g of the broiled eel cut (Comparative Example 6), 50 sticks of the chicken sausage containing the eel having the mixing ratio of 100g of the ground chicken and 900g of the broiled eel cut (Comparative Example 7), 50 sticks of the chicken sausage containing the eel having the mixing ratio of 200g of the ground chicken and 800g of the broiled eel cut (Comparative Example 8), 50 sticks of the chicken sausage containing the eel having the mixing ratio of 400g of the ground chicken and 600g of the broiled eel cut (Comparative Example 9), 50 sticks of the chicken sausage containing the eel having the mixing ratio of 600g of the ground chicken and 400g of the broiled eel cut (Comparative Example 10), 50 sticks of the chicken sausage containing the eel having the mixing ratio of 800g of the ground chicken and 200g of the broiled eel cut (Comparative Example 11), 50 sticks of the chicken sausage containing the eel having the mixing ratio of 950g of the ground chicken and 50g of the broiled eel cut (Comparative Example 12) and 50 sticks of the chicken sausage containing the eel having the mixing ratio of 970g of the ground chicken and 30g of the broiled eel cut (Comparative Example 13) were obtained in the same manner as Examples 8 to 14 and Comparative Examples 3 and 4.

The binding condition of the meat structure of the above chicken sausage containing the eel was evaluated by 20 panelists (8 adult males, 12 adult females) according to the seeing check. All of 20 panelists were evaluated that the bindingness needed for the formation of sausage was not obtained.

### Examples 15 to 21 and Comparative Examples 14 and 15:

To 2.6 kg of the pork chopped by the 6mm plate, 1.6 kg of water and 60g of common salt, further 8g of sodium hydrogencarbonate were added and ground for 10 minutes by Stephan cutter adjusted to 40 torr of the vacuum degree to prepare 4.2 kg of the ground pork meat.

Next, the fresh meat of tuna was cut in 4 to 5 mm3 dice-shape to obtain the fresh cut of tuna. Subsequently, to water, viscosity increasing polysaccharide (Bistopp (trade name) produced by San-ei-gen FFI Co., Ltd.) and sugar were dissolved, heated, added soy sauce, sugar and seasoning, and further heated to boiling and added the above fresh cut, put the lid thereon and simmered to decrease the water to half over a low heat to prepare 4.2 kg of the boiled tuna.

30g of 4.2 kg of the above ground pork and 970g of 4.2 kg of the above boiled tuna were mixed, filled in the artificial casing comprising collagen, sealed at both ends, heated at 85°C for 20 minutes in the steamboiler, and cooled 5°C to obtain 50 sticks of the pork sausage containing the tuna of 20g/stick (Comparative Example 14).

Similarly, 50g of the above ground pork and 950g of the above boiled tuna were mixed to obtain 50 sticks of the pork sausage containing the tuna (Example 15). Further, 50 sticks of the pork sausage containing the tuna having the mixing ratio of 100g of the ground pork and 900g of the boiled tuna (Example 16), 50 sticks of the pork sausage containing the tuna having the mixing ratio of 200g of the ground pork and 800g of the boiled tuna (Example 17), 50 sticks of the pork sausage containing the tuna having the mixing ratio of 400g of the ground pork and 600g of the boiled tuna (Example 18), 50 sticks of the pork sausage containing the tuna having the mixing ratio of 600g of the ground pork and 400g of the boiled tuna (Example 19), 50 sticks of the pork sausage containing the tuna having the mixing ratio of 800g of the ground pork and 200g of the boiled tuna (Example 20), 50 sticks of the pork sausage containing the tuna having the mixing ratio of 950g of the ground pork and 50g of the boiled tuna (Example 21) and 50 sticks of the pork sausage containing the tuna having the mixing ratio of 970g of the ground pork and 30g of the boiled tuna (Comparative Example 15) were obtained in the same manner.

The binding condition of the meat structure of the above pork sausage containing the tuna was evaluated by 20 panelists (8 adult males, 12 adult females) according to the seeing check. The sensory test was also carried out by the same 20 panelists. The results are shown in Table 9.

**Table 9**

| | Ground Pork | Boiled Tuna | Binding Condition | Sensory Test |
|---|---|---|---|---|
| Comp.Ex.14 | 30 g | 970 g | - | - |
| Example 15 | 50 | 950 | + | + |
| Example 16 | 100 | 900 | + + | + + |
| Example 17 | 200 | 800 | + + | + + |
| Example 18 | 400 | 600 | + + | + + |
| Example 19 | 600 | 400 | + + | + + |
| Example 20 | 800 | 200 | + + | + + |
| Example 21 | 950 | 50 | + + | + |
| Comp.Ex.15 | 970 | 30 | + + | - |

It was confirmed that the pork sausages containing the tuna having the mixing ratio of 50 to 950g of the ground pork and 950 to 50g of the boiled tuna were nice, particular the pork sausages containing the tuna having the mixing ratio of 100 to 800g of the ground pork and 900 to 200g of the boiled tuna were superior, in the binding condition and the sensory test.

### Comparative Examples 16 to 24:

To 2.6 kg of the pork chopped by the 6mm plate, 1.6 kg of water and 60g of common salt were added and ground for 10 minutes by Stephan cutter adjusted to 40 torr of the vacuum degree to prepare 4.2 kg of the ground pork meat added no alkaline substance.

Next, using the above ground pork, 50 sticks of the pork sausage containing the tuna having the mixing ratio of 30g of the ground pork and 970g of the boiled tuna (Comparative Example 16), 50 sticks of the pork sausage containing the tuna having the mixing ratio of 50g of the ground pork and 950g of the boiled tuna (Comparative Example 17), 50 sticks of the pork sausage containing the tuna having the mixing ratio of 100g of the ground pork and 900g of the boiled tuna (Comparative Example 18), 50 sticks of the pork sausage containing the tuna having the mixing ratio of 200g of the ground pork and 800g of the boiled tuna (Comparative Example 19), 50 sticks of the pork sausage containing the tuna having the mixing ratio of 400g of the ground pork and 600g of the boiled tuna (Comparative Example 20), 50 sticks of the pork sausage containing the tuna having the mixing ratio of 600g of the ground pork and 400g of the boiled tuna (Comparative Example 21), 50 sticks of the pork sausage containing the tuna having the mixing ratio of 800g of the ground pork and 200g of the boiled tuna (Comparative Example 22), 50 sticks of the pork sausage containing the tuna having the mixing ratio of 950g of the ground pork and 50g of the boiled tuna (Comparative Example 23) and 50 sticks of the pork sausage containing the tuna having the mixing ratio of 970g of the ground pork and 30g of the boiled tuna (Comparative Example 24) were obtained in the same manner as Examples 15 to 21 and Comparative Examples 14 and 15.

The binding condition of the meat structure of the above pork sausage containing the tuna was evaluated by 20 panelists (8 adult males, 12 adult females) according to the seeing check. All of 20 panelists were evaluated that the bindingness needed for the formation of sausage was not obtained.

### Examples 22 to 28 and Comparative Examples 25 and 26:

To 2.6 kg of the beef chopped by the 6mm plate, 1.6 kg of water and 60g of common salt, further 4g of sodium carbonate and 4g of sodium hydrogencarbonate were added and ground for 10 minutes by Stephan cutter adjusted to 40 torr of the vacuum degree to prepare 4.2 kg of the ground beef meat.

Next, to the boiled water containing common salt at the concentration 3%, the queen crab was added and boiled for 25 minutes at high heat, and put in the basket for the cooling as it was. The limb meat was cut in 1 cm3 dice-shape and the shoulder meat was scraped out as the flake to prepare 4.2 kg of the queen crab meat comprising the limb cut and shoulder flake.

30g of 4.2 kg of the above ground beef and 970g of 4.2 kg of the above queen crab meat were mixed, filled in the artificial casing comprising collagen, sealed at both ends, heated at 85 °C for 20 minutes in the steamboiler, and cooled 5°C to obtain 50 sticks of the beef sausage containing the crab of 20g/stick (Comparative Example 25).

Similarly, 50g of the above ground beef and 950g of the above queen crab meat were mixed to obtain 50 sticks of the beef sausage containing the crab (Example 22). Further, 50 sticks of the beef sausage containing the crab having the mixing ratio of 100g of the ground beef and 900g of the queen crab meet (Example 23), 50 sticks of the beef sausage containing the crab having the mixing ratio of 200g of the ground beef and 800g of the queen crab meat (Example 24), 50 sticks of the beef sausage containing the crab having the mixing ratio of 400g or the ground beef and 600g of the queen crab meat (Example 25), 50 sticks of the beef sausage containing the crab having the mixing ratio of 600g of the ground beef and 400g of the queen crab meat (Example 26), 50 sticks of the beef sausage containing the crab having the mixing ratio of 800g of the ground beef and 200g of the queen crab meat (Example 27) , 50 sticks of the beef sausage containing the crab having the mixing ratio of 950g of the ground beef and 50g of the queen crab (Example 28) and 50 sticks of the beef sausage containing the crab having the mixing ratio of 970g of the ground beef and 30g of the queen crab meat (Comparative Example 26) were obtained in the same manner.

The binding condition of the meat structure of the above beef sausage containing the crab was evaluated by 20 panelists (8 adult males, 12 adult females) according to the seeing check. The sensory test was also carried out by the same 20 panelists. The results are shown in Table 10.

**Table 10**

| | Ground Beef | Queen Crab Meat | Binding Condition | Sensory Test |
|---|---|---|---|---|
| Comp.Ex.25 | 30 g | 970 g | - | - |
| Example 22 | 50 | 950 | + | + |
| Example 23 | 100 | 900 | ++ | ++ |
| Example 24 | 200 | 800 | ++ | ++ |
| Example 25 | 400 | 600 | ++ | ++ |
| Example 26 | 60.0 | 400 | ++ | ++ |
| Example 27 | 800 | 200 | ++ | ++ |
| Example 28 | 950 | 50 | ++ | + |
| Comp.Ex.26 | 970 | 30 | ++ | - |

It was confirmed that the beef sausages containing the crab having the mixing ratio of 50 to 950g of the ground beef and 950 to 50g of the queen crab meat were nice, particular the beef sausages containing the crab having the mixing ratio of 100 to 800g of the ground beef and 900 to 200g of the queen crab meat were superior, in the binding condition and the sensory test.

### Comparative Examples 27 to 35:

To 2.6 kg of the beef chopped by the 6mm plate, 1.6 kg of water and 60g of common salt were added and ground for 10 minutes by Stephan cutter adjusted to 40 torr of the vacuum degree to prepare 4.2 kg of the ground beef meat added no alkaline substance.

Next, using the above ground beef, 50 sticks of the beef sausage containing the crab having the mixing ratio of 30g of the ground beef and 970g of the queen crab meat (Comparative Example 27), 50 sticks of the beef sausage containing the crab having the mixing ratio of 50g of the ground beef and 950g of the queen crab meat (Comparative Example 28), 50 sticks of the beef sausage containing the crab having the mixing ratio of 100g of the ground beef and 900g of the queen crab meat (Comparative Example 29), 50 sticks of the beef sausage containing the crab having the mixing ratio of 200g of the ground beef and 800g of the queen crab meat (Comparative Example 30), 50 sticks of the beef sausage containing the crab having the mixing ratio of 400g of the ground beef and 600g of the queen crab meat (Comparative Example 31), 50 sticks of the beef sausage containing the crab having the mixing ratio of 600g of the ground beef and 400g of the queen crab meat (Comparative Example 32), 50 sticks of the beef sausage containing the crab having the mixing ratio of 800g of the ground beef and 200g of the queen crab meat (Comparative Example 33), 50 sticks of the beef sausage containing the crab having the mixing ratio of 950g of the ground beef and 50g of the queen crab meat (Comparative Example 34) and 50 sticks of the beef sausage containing the crab having the mixing ratio of 970g of the ground beef and 30g of the queen crab meat (Comparative Example 35) were obtained in the same manner as Examples 22 to 28 and Comparative Examples 25 and 26.

The binding condition of the meat structure of the above beef sausage containing the crab was evaluated by 20 panelists (8 adult males, 12 adult females) according to the seeing check. All of 20 panelists were evaluated that the bindingness needed for the formation of sausage was not obtained.

### Examples 29 to 35 and Comparative Examples 36 and 37:

To 2.6 kg of the chicken chopped by the 6mm plate, 1.6 kg of water, 60g of common salt, 20g of pepper and 20g of sodium glutamate, further 75g of sodium hydrogencarbonate were added and ground for 10 minutes by Stephan cutter adjusted to 35 torr of the vacuum degree to prepare 4.2 kg of the ground chicken meat.

Next, 4.2 kg of the kamaboko cut in rectangle-shape was prepared.

30g of 4.2 kg of the above ground chicken and 970g of 4.2 kg of the above cut kamaboko were mixed, filled in the artificial casing comprising collagen, sealed at both ends, heated at 85°C for 20minutes in the steamboiler and cooled at 5 °C to obtain 50 sticks of the chicken sausage containing the kamaboko of 20g/stick. (Comparative Example 36).

Similarly, 50g of the above ground chicken and 950g of the above cut kamaboko were mixed to obtain 50 sticks of the chicken sausage containing the kamaboko (Example 29). Further, 50 sticks of the chicken sausage containing the kamaboko having the mixing ratio of 100g of the ground chicken and 900g of the cut kamaboko (Example 30), 50 sticks of the chicken sausage containing the kamaboko having the mixing ratio of 200g of the ground chicken and 800g of the cut kamaboko (Example 31), 50 sticks of the chicken sausage containing the kamaboko having the mixing ratio of 400g of the ground chicken and 600g of the cut kamaboko (Example 32), 50 sticks of the chicken sausage containing the kamaboko having the mixing ratio of 600g of the ground chicken and 400g of the cut kamaboko (Example 33), 50 sticks of the chicken sausage containing the kamaboko having the mixing ratio of 800g of the ground chicken and 200g of the cut kamaboko (Example 34), 50 sticks of the chicken sausage containing the kamaboko having the mixing ratio of 950g of the ground chicken and 50g of the cut kamaboko (Example 35) and 50 sticks of the chicken sausage containing the kamaboko having the mixing ratio of 970g of the ground chicken and 30g of the cut kamaboko (Comparative Example 37) were obtained in the same manner.

The binding condition of the meat structure of the above chicken sausage containing the kamaboko was evaluated by 20 panelists (8 adult males, 12 adult females) according to the seeing check. The sensory test was also carried out by the same 20 panelists. The results are shown in Table 11.

**Table 11**

| | Ground Chicken | Cut Kamaboko | Binding Condition | Sensory Test |
|---|---|---|---|---|
| Comp.Ex.36 | 30 g | 970 g | - | - |
| Example 29 | 50 | 950 | + | + |
| Example 30 | 100 | 900 | + + | + + |
| Example 31 | 200 | 800 | + + | + + |
| Example 32 | 400 | 600 | + + | + + |
| Example 33 | 600 | 400 | + + | + + |
| Example 34 | 800 | 200 | + + | + + |
| Example 35 | 950 | 50 | + + | + |
| Comp.Ex.37 | 970 | 30 | + + | - |

It was confirmed that the chicken sausages containing the kamaboko having the mixing ratio of 50 to 950g of the ground chicken and 950 to 50g of the cut kamaboko were nice, particular the chicken sausages containing the kamaboko having the mixing ratio of 100 to 800g of the ground chicken and 900 to 200g of the cut kamaboko were superior, in the binding condition and the sensory test.

### Examples 36 to 42 and Comparative Examples 38 and 39:

To 2.6 kg of the chicken chopped by the 6mm plate, 1.6 kg of water, 60g of common salt and 20g of pepper, further 7g of sodium carbonate were added and ground for 10 minutes by Stephan cutter adjusted to 40 torr of the vacuum degree to prepare 4.2 kg of the ground chicken meat.

Next, 4.2 kg of the minced meat seasoned by soy sauce and sugar was prepared.

30g of 4.2 kg of the above ground chicken and 970g of 4.2 kg of the above minced meat were mixed, filled in the artificial casing comprising collagen, sealed at both ends, heated at 85°C for 20 minutes in the steamboiler and cooled at 5°C to obtain 50 sticks of the chicken sausage containing the minced meat of 20g/stick. (Comparative Example 38).

Similarly, 50g of the above ground chicken and 950g of the above minced meat were mixed to obtain 50 sticks of the chicken sausage containing the minced meat (Example 36). Further, 50 sticks of the chicken sausage containing the minced meat having the mixing ratio of 100g of the ground chicken and 900g of the minced meat (Example 37), 50 sticks of the chicken sausage containing the minced meat having the mixing ratio of 200g of the ground chicken and 800g of the minced meat (Example 38), 50 sticks of the chicken sausage containing the minced meat having the mixing ratio of 400g of the ground chicken and 600g of the minced meat (Example 39), 50 sticks of the chicken sausage containing the minced meat having the mixing ratio of 600g of the ground chicken and 400g of the minced meat (Example 40), 50 sticks of the chicken sausage containing the minced meat having the mixing ratio of 800g of the ground chicken and 200g of the minced meat (Example 41), 50 sticks of the chicken sausage containing the minced meat having the mixing ratio of 950g of the ground chicken and 50g of the minced meat (Example 42) and 50 sticks of the chicken sausage containing the minced meat having the mixing ratio of 970g of the ground chicken and 30g of the minced meat (Comparative Example 39) were obtained in the same manner.

The binding condition of the meat structure of the above chicken sausage containing the minced meat was evaluated by 20 panelists (8 adult males, 12 adult females) according to the seeing check. The sensory test was also carried out by the same 20 panelists. The results are shown in Table 12.

**Table 12**

| | Ground Chicken | Minced Meat | Binding Condition | Sensory Test |
|---|---|---|---|---|
| Comp.Ex.38 | 30 g | 970 g | - | - |
| Example 36 | 50 | 950 | + | + |
| Example 37 | 100 | 900 | ++ | + + |
| Example 38 | 200 | 800 | + + | + + |
| Example 39 | 400 | 600 | ++ | ++ |
| Example 40 | 600 | 400 | ++ | ++ |
| Example 41 | 800 | 200 | ++ | ++ |
| Example 42 | 950 | 50 | ++ | + |
| Comp.Ex.39 | 970 | 30 | ++ | - |

It was confirmed that the chicken sausages containing the minced meat having the mixing ratio of 50 to 950g of the ground chicken and 950 to 50g of the minced meat were nice, particular the chicken sausages containing the minced meat having the mixing ratio of 100 to 800g of the ground chicken and 900 to 200g of the minced meat were superior, in the binding condition and the sensory test.

According to the present invention, it is provided the processed meat food which is superior in bindingness without adding the binder and improves the gourmand taste.

Accordingly, the industrial applicability of the present invention is very high.

A processed meat food produced by mixing a filler hashed or shattered after heating or heating and seasoning a meat of a fresh fish and shellfish and/or an animal in one condition selected from the group consisting of the condition as it is, the condition removed the non-edible portion and the condition of the slice thereof, and a meat paste produced by kneading 100 weight parts of a meat with water in an amount of more than 20 weight parts to not more than 100 weight parts, an alkaline substance in an amount of 0.1 to 1.0 weight part and at least a seasoning under 100 torr or less of vacuum, and then heating the mixture of said filler and meat paste, and a method for producing the processed meat food, which are superior in the bindingness without adding the binder and improves the gourmand taste.

## Claims

1. A processed meat food producible by mixing
a filler hashed or shattered after heating or heating and seasoning a meat of a fresh fish and shellfish and/or an animal in one condition selected from the group consisting of the condition as it is, the condition removed the non-edible portion and the condition of the slice thereof, and
a meat paste produced by kneading 100 weight parts of a meat with water in an amount of more than 20 weight parts to not more than 100 weight parts, an alkaline substance in an amount of 0.1 to 1.0 weight part and at least a seasoning under 13 332, 237 Pa (100 torr) or less of vacuum,
and then heating the mixture of said filler and meat paste.

2. A processed meat food producible by mixing
a filler hashed or shattered after heating or heating and
seasoning a meat of a fresh fish and shellfish and/or an animal in one condition selected from the group consisting of the condition as it is, the condition removed the non-edible portion and the condition of the slice thereof, and
a meat paste produced by kneading 100 weight parts of a meat with water in an amount of more than 20 weight parts to not more than 100 weight parts, an alkaline substance in an amount of 0.1 to 1.0 weight part and at least a seasoning under 13 332, 237 Pa (100 torr) or less of vacuum,
filling the mixture of said filler and meat paste in an edible casing and then heating the mixture.

3. The processed meat food according to Claim 1 or 2, wherein the alkaline substance is one or more selected from the group consisting of hydroxide, carbonate, hydrogencarbonate, phosphate, polyphosphate and a salt of organic acid of an alkaline metal or an alkaline earth metal.

4. A method for producing a processed meat food, **characterized in that** it comprises the step of mixing
5 to 95 weight parts of a filler hashed or shattered after heating or heating and seasoning a meat of a fresh fish and shellfish and/or an animal in one condition selected from the group consisting of the condition as it is, the condition removed the non-edible portion and the condition of the slice thereof, and
95 to 5 weight parts of a meat paste produced by kneading 100 weight parts of a meat with water in an amount of more than 20 weight parts to not more than 100 weight parts, an alkaline substance in an amount of 0.1 to 1.0-weight part and at least a seasoning under 13 332,237 Pa (100 torr) or less of vacuum,
and then heating the mixture of said filler and meat paste.

5. A method for producing a processed meat food, **characterized in that** it comprises the step of mixing
5 to 95 weight parts of a filler hashed or shattered after heating or heating and seasoning a meat of a fresh fish and shellfish and/or an animal in one condition selected from the group consisting of the condition as it is, the condition removed the non-edible portion and the condition of the slice thereof, and
95 to 5 weight parts of a meat paste produced by kneading 100 weight parts of a meat with water in an amount of more than 20 weight parts to not more than 100 weight parts, an alkaline substance in an amount of 0.1 to 1.0 weight part and at least a seasoning under 13 332,237 Pa (100 torr) or less of vacuum,
filling the mixture of said filler and meat paste in an edible casing and then heating the mixture.

6. The method for producing the processed meat food according to Claim 4 or 5, wherein the alkaline substance is one or more selected from the group consisting of hydroxide, carbonate, hydrogencarbonate, phosphate, polyphosphate and a salt of organic acid of an alkaline metal or an alkaline earth metal.

## Patentansprüche

1. Verarbeitetes Fleischnahrungsmittel, herstellbar durch Vermischen von
einem zerhackten oder zerschlagenen Füllstoff nach Erwärmen oder Erwärmen und Würzen eines Fleisches von einem frischen Fisch und Schalentier und/oder einem Tier in einem Zustand, gewählt aus der Gruppe bestehend aus dem Zustand als solches, dem Zustand, in dem der unverzehrbare Teil entfernt ist, und dem Zustand von dessen Scheibe, und
einer Fleischpaste, hergestellt durch Kneten von 100 Gewichtsteilen eines Fleisches mit Wasser in einer Menge von mehr als 20 Gewichtsteilen bis nicht mehr als 100 Gewichtsteilen, einer alkalischen Substanz in einer Menge von 0,1 bis 1,0 Gewichtsteilen und mindestens eines Würzmittels unter einem Vakuum von 13332,237 Pa (100 Torr) oder weniger,
und danach Erwärmen des Gemisches des Füllstoffes und der Fleischpaste.

2. Verarbeitetes Fleischnahrungsmittel, herstellbar durch Vermischen von
einem zerhackten oder zerschlagenen Füllstoff nach Erwärmen oder Erwärmen und Würzen eines Fleisches von einem frischen Fisch und Schalentier und/oder einem Tier in einem Zustand, gewählt aus der Gruppe bestehend aus dem Zustand als solches, dem Zustand, in dem der unverzehrbare Teil entfernt ist, und dem Zustand von dessen Scheibe, und
einer Fleischpaste, hergestellt durch Kneten von 100 Gewichtsteilen eines Fleisches mit Wasser in einer Menge von mehr als 20 Gewichtsteilen bis nicht mehr als 100 Gewichtsteilen, einer alkalischen Substanz in einer Menge von 0,1 bis 1,0 Gewichtsteilen und mindestens eines Würzmittels unter Vakuum von 13332,237 Pa (100 Torr) oder weniger,
Füllen des Gemisches des Füllstoffes und der Fleischpaste in eine verzehrbare Hülle und danach Erwärmen des Gemisches.

3. Verarbeitetes Fleischnahrungsmittel nach Anspruch 1 oder 2, wobei die alkalische Substanz eine oder mehrere, gewählt aus der Gruppe bestehend aus Hydroxid, Carbonat, Hydrogencarbonat, Phosphat, Polyphosphat und einem Salz einer organischen Säure eines Alkalimetalls oder eines Erdalkalimetalls ist.

4. Verfahren zum Herstellen eines verarbeiteten Fleischnahrungsmittels, **dadurch gekennzeichnet, dass** es umfasst den Schritt des Vermischens von
5 bis 95 Gewichtsteilen eines zerhackten oder zerschlagenen Füllstoffes nach Erwärmen oder Erwärmen und Würzen eines Fleisches von einem frischen Fisch und einem Schalentier und/oder einem Tier in einem Zustand, gewählt aus der Gruppe bestehend aus dem Zustand als solches, dem Zustand, in dem der unverzehrbare Teil entfernt ist, und dem Zustand von dessen Scheibe, und
95 bis 5 Gewichtsteilen einer Fleischpaste, hergestellt durch Kneten von 100 Gewichtsteilen eines Fleisches mit Wasser in einer Menge von mehr als 20 Gewichtsteilen bis nicht mehr als 100 Gewichtsteile, einer alkalischen Substanz in einer Menge von 0,1 bis 1,0 Gewichtsteilen und mindestens eines Würzmittels unter einem Vakuum von 13332,237 Pa (100 Torr) oder weniger,
und danach Erwärmen des Gemisches des Füllstoffes und der Fleischpaste.

5. Verfahren zum Herstellen eines verarbeiteten Fleischnahrungsmittels, **dadurch gekennzeichnet, dass** es umfasst den Schritt des Vermischens von
5 bis 95 Gewichtsteilen eines zerhackten oder zerschlagenen Füllstoffes nach Erwärmen oder Erwärmen und Würzen eines Fleisches von einem frischen Fisch und einem Schalentier und/oder einem Tier in einem Zustand, gewählt aus der Gruppe bestehend aus dem Zustand als solches, dem Zustand, in dem der unverzehrbare Teil entfernt ist, und dem Zustand von dessen Scheibe, und
95 bis 5 Gewichtsteilen einer Fleischpaste, hergestellt durch Kneten von 100 Gewichtsteilen eines Fleisches mit Wasser in einer Menge von mehr als 20 Gewichtsteilen bis nicht mehr als 100 Gewichtsteile, einer alkalischen Substanz in einer Menge von 0,1 bis 1,0 Gewichtsteilen und mindestens eines Würzmittels unter einem Vakuum von 13332,237 Pa (100 Torr) oder weniger,
Füllen des Gemisches des Füllstoffes und der Fleischpaste in eine verzehrbare Hülle und danach Erwärmen des Gemisches.

6. Verfahren zum Herstellen des verarbeiteten Fleischnahrungsmittels gemäß Anspruch 4 oder 5, wobei die alkalische Substanz eine oder mehrere, gewählt aus der Gruppe bestehend aus Hydroxid, Carbonat, Hydrogencarbonat, Phosphat, Polyphosphat und einem Salz einer organischen Säure eines Alkalimetalls oder eines Erdalkalimetalls ist.

## Revendications

1. Produit alimentaire carné susceptible d'être produit par mélange
d'une charge hachée ou émincée après un chauffage ou un chauffage et un assaisonnement d'une chaire d'un poisson frais et de crustacés et/ou d'un animal dans un état choisi dans le groupe constitué par l'état dans lequel elle se trouve, l'état dans lequel la partie non comestible a été retirée et l'état d'une tranche de celle-ci, et
d'une pâte carnée produite par pétrissage de 100 parties en poids d'une chaire avec de l'eau dans une quantité supérieure à 20 parties en poids à pas plus de 100 parties en poids, d'une substance alcaline dans une quantité de 0,1 à 1,0 partie en poids et d'au moins un assaisonnement sous un vide de 13 332,237 Pa (100 tors) ou moins,
et ensuite le chauffage du mélange de ladite charge et de ladite pâte carnée.

2. Produit alimentaire carné susceptible d'être produit par mélange
d'une charge hachée ou émincée après un chauffage ou un chauffage et un assaisonnement d'une chaire d'un poisson frais et de crustacés et/ou d'un animal dans un état choisi dans le groupe constitué par l'état dans lequel elle se trouve, l'état dans lequel la partie non comestible a été retirée et l'état d'une tranche de celle-ci, et
d'une pâte carnée produite par pétrissage de 100 parties en poids d'une chaire avec de l'eau dans une quantité supérieure à 20 parties en poids à pas plus de 100 parties en poids, d'une substance alcaline dans une quantité de 0,1 à 1,0 partie en poids et d'au moins un assaisonnement sous un vide de 13 332,237 Pa (100 tors) ou moins,
le remplissage du mélange de ladite charge et de ladite pâte carnée dans un emballage comestible et ensuite le chauffage du mélange.

3. Produit alimentaire carné selon la revendication 1 ou 2, dans lequel la substance alcaline est une ou plusieurs substances choisies dans le groupe constitué par un hydroxyde, un carbonate, un hydrogénocarbonate, un phosphate, un polyphosphate et un sel d'un acide organique d'un métal alcalin ou d'un métal alcalino-terreux.

4. Procédé de production d'un produit alimentaire carné, **caractérisé en ce qu'**il comprend l'étape de mélange
de 5 à 95 parties en poids d'une charge hachée ou émincée après un chauffage ou un chauffage et un assaisonnement d'une chaire d'un poisson frais et de crustacés et/ou d'un animal dans un état choisi dans le groupe constitué par l'état dans lequel elle se trouve, l'état dans lequel la partie non comestible a été retirée et l'état d'une tranche de celle-ci, et
de 95 à 5 parties en poids d'une pâte carnée produite par pétrissage de 100 parties en poids d'une chaire avec de l'eau dans une quantité supérieure à 20 parties en poids à pas plus de 100 parties en poids, d'une substance alcaline dans une quantité de 0,1 à 1,0 partie en poids et d'au moins un assaisonnement sous un vide de 13 332,237 Pa (100 tors) ou moins,
et ensuite le chauffage du mélange de ladite charge et de ladite pâte carnée.

5. Procédé de production d'un produit alimentaire carné, **caractérisé en ce qu'**il comprend l'étape de mélange
de 5 à 95 parties en poids d'une charge hachée ou émincée après un chauffage ou un chauffage et un assaisonnement d'une chaire d'un poisson frais et de crustacés et/ou d'un animal dans un état choisi dans le groupe constitué par l'état dans lequel elle se trouve, l'état dans lequel la partie non comestible a été retirée et l'état d'une tranche de celle-ci, et
de 95 à 5 parties en poids d'une pâte carnée produite par pétrissage de 100 parties en poids d'une chaire avec de l'eau dans une quantité supérieure à 20 parties en poids à pas plus de 100 parties en poids, d'une substance alcaline dans une quantité de 0,1 à 1,0 partie en poids et d'au moins un assaisonnement sous un vide de 13 332,237 Pa (100 tors) ou moins,
le remplissage du mélange de ladite charge et de ladite pâte carnée dans un emballage comestible et ensuite le chauffage du mélange.

6. Procédé de production d'un produit alimentaire carné selon la revendication 4 ou 5, dans lequel la substance alcaline est une ou plusieurs substances choisies dans le groupe constitué par un hydroxyde, un carbonate, un hydrogénocarbonate, un phosphate, un polyphosphate et un sel d'un acide organique d'un métal alcalin ou d'un métal alcalino-terreux.
